## Europäisches Patentamt
## European Patent Office
## Office européen des brevets

(11) Publication number: **0 125 588**
**B1**

# EUROPEAN PATENT SPECIFICATION

(45) Date of publication of patent specification: **18.03.87**

(51) Int. Cl.⁴: **H 02 M 7/515**

(21) Application number: **84105094.1**

(22) Date of filing: **05.05.84**

(54) Load voltage control for resonant inverter circuits.

(30) Priority: **16.05.83 US 494834**

(43) Date of publication of application:
**21.11.84 Bulletin 84/47**

(45) Publication of the grant of the patent:
**18.03.87 Bulletin 87/12**

(84) Designated Contracting States:
**DE FR GB NL**

(56) References cited:
**EP-A-0 041 360**
**EP-A-0 071 284**
**US-A-4 346 332**

(73) Proprietor: **GENERAL ELECTRIC COMPANY**
**1 River Road**
**Schenectady New York 12305 (US)**

(72) Inventor: **Turnbull, Fred Gerdes**
**829 Sanders Avenue**
**Scotia New York 12302 (US)**

(74) Representative: **Schüler, Horst, Dr. et al**
**Kaiserstrasse 41**
**D-6000 Frankfurt/Main 1 (DE)**

Courier Press, Leamington Spa, England.

## Description

### Background of the Invention

This invention relates to resonant inverter circuits and more particularly to a control for resonant inverters having switching devices with self-turn-off capability.

Present resonant transister inverters use frequency control to provide load voltage control. The transistor inverters are usually operated above the resonant frequency of the resonant circuit to reduce losses during transistor switching and because the transistors can turn off the current supplied to the resonant circuit. As the frequency of operation of the resonant circuit is increased above the resonant frequency, the load voltage decreases. The load voltage cannot be reduced completely to zero, as this would require operation at very high (theoretically infinite) frequencies. Also as the frequency of operation increases (moves away from the resonant frequency), the voltage waveform deteriorates and becomes non-sinusoidal since the high frequencies cause the circuit to appear inductive rather than resistive. (US—A 4 346 332).

Silicon controlled rectifier (SCR) resonant inverters operate below the resonant frequency of the resonant circuit so that the feedback diodes connected in inverse parallel with the SCRs carry current allowing the SCRs to turn off. Lowering the frequency of the SCR switching, lowers the output voltage, but zero frequency is needed for zero voltage output. As the switching frequency drops, circuit response time increases and the load voltage waveforms become non-sinusoidal as the circuit appears capacitive rather than resistive. (EP—A—0 041 360).

It is an object of the present invention to provide a control for a transistor inverter that provides load voltage control while operating at a predetermined fixed frequency to avoid stressing transistor switching devices due to very high frequency operation.

It is a further object of the present invention to provide a control for a transistor inverter that provides sinusoidal output voltages at different voltage output levels all with the same predetermined fixed frequency.

It is a still further object of the present invention to provide a control for a resonant transistor inverter than can control the output voltage from a maximum value all the way to zero while still having a quick response time to changing load voltage commands.

### Summary of the Invention

In one aspect of the present invention, a control for a resonant inverter is provided. The resonant inverter has at least one switching device with self-turn-off capability situated between a d.c. power source and the resonant circuit of the inverter. The control comprises means for sensing a particular output parameter of the resonant inverter and means for providing a command signal for that parameter. Means for comparing the commanded parameter with the sensed parameter are provided to generate an error signal. Pulse width modulation means responsive to the error signal and a fixed frequency signal vary the duty cycle of pulses supplied by the pulse width modulation means to the switch to achieve the commanded output parameter. The fixed frequency signal supplied to the pulse width modulation means fixes the operating frequency of the resonant inverter.

### Brief Description of the Drawing

While the specification concludes with claims particularly pointing out and distinctly claiming the present invention, the objects and advantages of the invention can be more readily ascertained from the following description in the preferred embodiment when used in conjunction with the accompanying drawing in which:

Figure 1 is a part block diagram, part schematic diagram representation of a half-bridge resonant inverter and control in accordance with the present invention.

Figures 2a, 2b and 2c are waveform diagrams on a common time scale showing device currents for different output voltages helpful in explaining the operation of Figure 1.

Figure 3 is a composite waveform diagram showing a range of inverter output voltages from full output voltage to zero output voltage achievable by the circuit of Figure 1.

### Detailed Description of the Invention

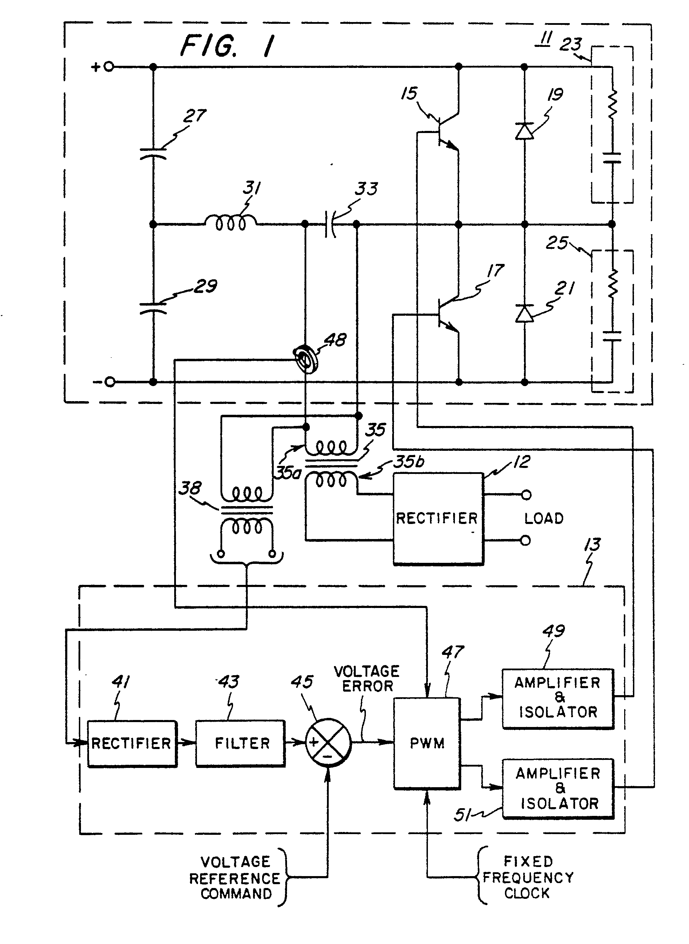

Referring now to Figure 1, a resonant inverter 11 with its output, transformer coupled to a rectifier 12, is shown connected to a control 13. Inverter 11 has a half-bridge configuration with two switching devices with self-turn-off capability connected in series with one another. Two bipolar NPN transistors 15 and 17 are shown in the Figure but other devices with self-turn-off capability such as gate turn-off thyristors and field effect transistors could alternatively be used. The series combination of transistors 15 and 17 is connected across an external d.c. power supply (not shown). Connected in inverse parallel with each of the transistors 15 and 17 is a feedback diode 19 and 21, respectively. Snubber circuits 23 and 25, each comprising a resistor in series with capacitor, are connected across each of the transistors, respectively, to reduce transistor turn-off stresses. A series combination of capacitors 27 and 29 is connected across the external d.c. power supply to provide a center tapped voltage from the d.c. supply. A series combination of an inductor 31 and a capacitor 33 is connected between the junction of the two capacitors 27 and 29 and between the junction of the two transistors 15 and 17. A step-up transformer 35, has its primary winding 35a connected across the output of the resonant inverter 11 which is available across capacitor 33. The secondary winding 35b of step-up transformer 35 is connected to the input of rectifier circuit 12. The output of the rectifier circuit is connected to a load not shown.

The present embodiment provides a stepped-up d.c. voltage to a load and is suitable, for example, as an x-ray generator power supply. The resonant circuit elements, inductor 31 and capacitor 33, are shown as discrete elements. They also could be achieved fully or partially by the leakage inductance and distributed interwinding capacitance, respectively, of a high voltage transformer. The underdamped resonant circuit of inverter 11 comprises inductor 31, capacitor 33, the transformer 35 interwinding capacitance and leakage reactance and the load, as reflected through the rectifier and transformer.

Control circuit 13 is supplied with a signal proportional to the output voltage of the inverter from a signal transformer 38 connected across capacitor 33. The output voltage signal is supplied to a rectifier 41. The d.c. output signal of rectifier circuit 41 is smoothed by a filter circuit 43 and supplied to a noninverting terminal of a summer circuit 45. A voltage reference command signal is supplied to an inverting input of summer circuit 45. The error signal generated by the summer circuit is provided to a pulse width modulating (pwm) control circuit 47. The pwm circuit is also provided with a fixed frequency clock signal and a signal indicative of switching device current obtained from a current transformer 48 monitoring the current of the primary winding 35a of step-up transformer 35. The pulse width modulated pulses from the pwm control circuit 47 are alternately supplied through amplifier and isolators 49 and 51, respectively, to the bases of transistors 15 and 17.

The operation of the resonant inverter 11 and control 13 will now be described with reference to Figures 1, 2a, 2b, 2c and 3. The conduction time of transistors 15 and 17 controls the energy delivered to the resonant components and the load. The output voltage of the resonant inverter is available across capacitor 33 and the magnitude of the voltage is determined by the voltage reference command supplied to control circuit 13. The voltage reference command is a d.c. signal proportional to the desired d.c. output voltage of rectifier circuit 12. The actual a.c. output voltage of inverter 11, across capacitor 33, is applied to transformer 38 and rectified and smoothed by rectifier circuit 41 and filter circuit 43, respectively. The difference between the rectified output voltage and the voltage reference command obtained in summer 45, is a d.c. error voltage signal which is supplied to pwm control circuit 47 such as the regulating pulse width modulator SG 3526 from Silicon General, Garden Grove, California. A fixed frequency clock signal, proportional to the desired operating frequency at which the resonant circuit is to be driven is also supplied to the pwm circuit. The pwm circuit generates a sawtooth waveform at the clock frequency and compares the sawtooth waveform to the d.c. error signal to determine the pulse width of pulses to alternately be supplied to transistors 15 and 17. The frequency at which the transistors are switched is typically in the vicinity of 20 KHz. The frequency at which the resonant circuit is driven by transistors 15 and 17 is typically above the resonant frequency of the circuit but close to the resonant frequency to assure sinusoidal waveforms.

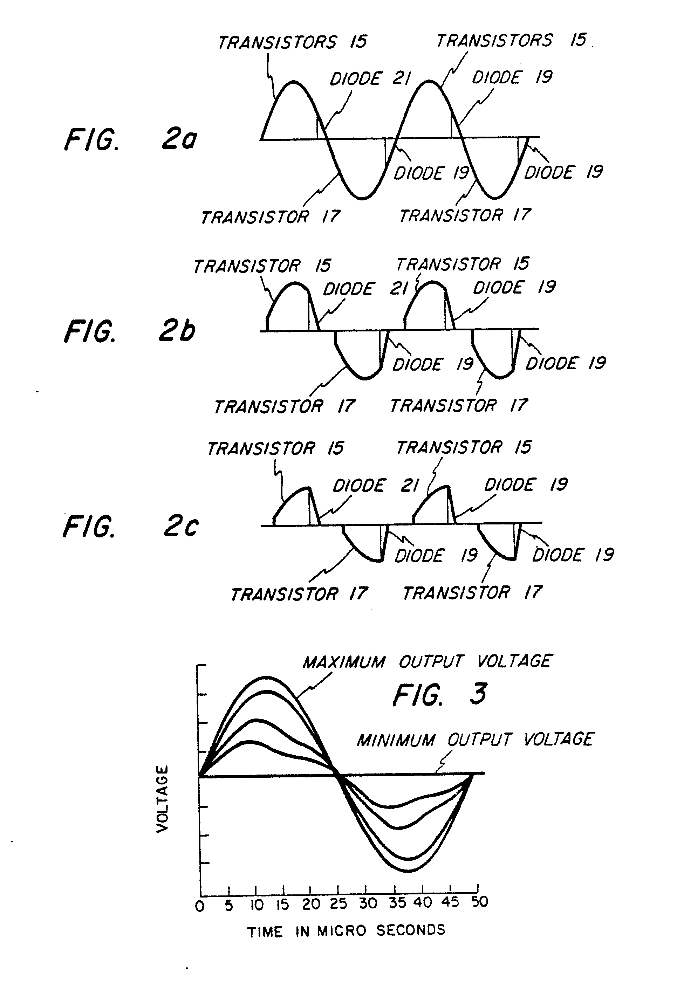

When the maximum voltage is commanded, the diode and transistor currents of Figure 2a result. Transistor 15 is biased into conduction at the beginning of the cycle by a pulse from control circuit 13 amplifier and isolator 49. At the end of the pulse, the transistor 15 is biased out of conduction and current flow transfers to diode 21 until the end of the half cycle. At the beginning of the next half cycle, a pulse from control circuit 13 amplifier and isolator 51 biases transistor 17 into conduction and at the end of the pulse, transistor 17 is biased out of conduction and current flow transfers to diode 19. The energy transferred to the load is the energy transferred by transistors 15 and 17 less the energy returned by corresponding diode 19 and 21.

When the commanded voltage decreases, the error voltage signal supplied to the pwm 47 is less and the pulse widths supplied by the control circuit 13 to the transistors 15 and 17 are shorter. The current waveforms of transistors 15 and 17 and diodes 19 and 21 for less than maximum commanded voltage can be seen in Figures 2b and 2c. The commanded voltage in Figure 2c is less than the voltage commanded in Figure 2b. The shorter pulse from control circuit 13 amplifier and isolator 49 does not begin at the beginning of the half cycle while the pulse in the full voltage command situation does. As shown in Figures 2b and 2c, there are periods of discontinuous conduction with none of the four devices, transistors 15 and 17 and diodes 19 and 21, carrying current. The output voltage of the inverter taken across the capacitor 33 remains substantially sinusoidal at reduced output voltages, even with the discontinuous device current, as can be seen in Figure 3. The substantially sinusoidal voltage across capacitor 33 is due to the ringing of the resonant circuit when it is driven close to its resonant frequency. It will also be noted that the output voltage waveforms of the inverter 11 are all at the same frequency.

In the present embodiment, the d.c. output voltage of rectifier 12 is controlled by measuring the a.c. primary voltage supplied to the rectifier. Alternatively, load d.c. voltage, current and power could be controlled by measuring the appropriate parameter and comparing the measured parameter to a commanded value to generate a d.c. error signal, and controlling the pulse width supplied to the switching transistors as previously described. The inverter could be configured in a full bridge configuration or with a single switching device with gate turn-off capability driving the resonant circuit.

If over current protection is desired, the output current of the inverter can be measured by a suitable current sensor and provided to the pulse width modulation circuit 47. If the measured current should exceed a predetermined value, the d.c. error voltage signal is overidden and a zero pulse width is produced by the pwm circuit, resulting in zero output voltage. The pwm circuit could either latch and have to be manually restarted or after a suitable time delay could restart automatically.

The foregoing describes a control for a resonant circuit that controls the output voltage from a maximum value to zero while maintaining a predetermined frequency of operation of the resonant inverter.

While the invention has been particularly shown and described with reference to a preferred embodiment thereof, it will be understood by those skilled in the art that various changes in form and details may be made without departing from the spirit and scope of the invention.

**Claims**

1. A control for a resonant inverter having at least one switching device (15, 17) with self-turn-off capability situated between a d.c. power source and the resonant circuit (31, 33) of said resonant inverter, said control comprising:
    circuit means (38, 41, 43) for sensing a particular output parameter of said resonant inverter;
    voltage generating means for providing a command signal for said parameter;
    summer means (45) coupled to said circuit means (38, 41, 43) and said voltage generating means for comparing the command signal parameter with the sensed parameter to generate an error signal;
    frequency generating means for generating a fixed frequency signal; and
    pulse width modulation means (47) coupling said summer means (45) to said witching device and being responsive to said error signal and said fixed frequency signal for varying the duty cycle of pulses supplied by the pulse width modulator means (47) to said switching device (15, 17) to achieve the commanded output parameter, the fixed frequency signal supplied to said pulse width modulation means fixing the operating frequency of said resonant inverter at substantially the resonant frequency of the resonant circuit.

2. A control for resonant inverter according to claim 1, characterised in that the resonant inverter is a half-bridge resonant inverter having two switching devices (15, 17) with self-turn-off capability and two diodes (19, 21), each of said switching devices (15, 17) being coupled across a diode (19, 21), respectively, in said half-bridge.

3. The control of claim 1 or 2, further comprising:
    current sensing means (48) coupled to said pulse width modulation means (47) for sensing the output current of said resonant inverter (11), said pulse width modulation means (47) being responsive to said output current and overriding said voltage command and reducing the pulse width of pulses supplied to said switching device (15, 17) to zero when said output current exceeds a predetermined value.

4. The control of claim 2, wherein said output parameter comprises the inverter output voltage, said output voltage being sensed across the capacitive component (33) of said resonant circuit (31, 33).

**Patentansprüche**

1. Regelung für einen Schwingkreis-Wechselrichter mit wenigstens einer Schaltvorrichtung (15, 17), die Selbstabschaltvermögen aufweist und zwischen einer Gleichstromquelle und dem Schwingkreis (31, 33) des Schwingkreis-Wechselrichters angeordnet ist, enthaltend:
    Schaltungsmittel (38, 41, 43) zum Abtasten eines bestimmten Ausgangsparameters des Schwingkreis-Wechselrichters,
    Spannungserzeugungsmittel zum Liefern eines Sollwert-Signals für den Parameter,
    Summiermittel (45), die mit den Schaltungsmitteln (38, 41, 43) und den Spannungserzeugungsmitteln verbunden sind, zum Vergleichen des Sollwert-Signals des Parameters mit dem Ist Wert des Parameters, um ein Fehlersignal zu erzeugen,
    Frequenzerzeugungsmittel zum Erzeugen eines Festfrequenzsignal und
    Pulsbreiten-Modulationsmittel (47), die die Summiermittel (45) mit der Schaltvorrichtung verbinden und auf das Fehlersignal und das Festfrequenzsignal ansprechen zum Verändern des Tastverhältnisses der Impulse, die von den Pulsbreiten-Modulationsmitteln (47) der Schaltvorrichtung (15, 17) zugeführt sind, um den Sollwert des Parameters zu erreichen, wobei das Festfrequenzsignal, das den Pulsbreiten-Modulationsmitteln zugeführt ist, die Arbeitsfrequenz des Schwingkreis-Wechselrichters im wesentlichen bei der Resonanzfrequenz des Schwingkreis-Wechselrichters fixiert.

2. Regelung für einen Schwingkreis-Wechselrichter nach Anspruch 1, dadurch gekennzeichnet, daß der Schwingkreis-Wechselrichter ein Halbbrücken-Wechselrichter ist und zwei Schaltvorrichtungen (15, 17) mit Selbstabschaltvermögen und zwei Dioden (19, 21) aufweist, wobei jede Schaltvorrichtung (15, 17) auf entsprechende Weise einer Diode (19, 21) in der Halbbrückenschaltung parallel geschaltet ist.

3. Regelung nach Anspruch 1 oder 2, wobei Stromfühlermittel (48) vorgesehen sind, die mit den Pulsbreiten-Modulationsmitteln (47) verbunden sind, zum Abfühlen des Ausgangsstroms des Schwingkreis-Wechselrichters (11), wobei die Pulsbreiten-Modulationsmittel (47) auf den Ausgangsstrom ansprechen und das Spannungssollwert-Signal übersteuern bzw. überdecken und die Pulsbreite der der Schaltvorrichtung (15, 17) zugeführten Impulse auf Null verkleinern, wenn der Ausgangsstrom einen vorbestimmten Wert überschreitet.

4. Regelung nach Anspruch 2, wobei der Ausgangsparameter die Ausgangsspannung des Wechselrichters ist, die über der kapazitiven Komponente (33) des Schwingkreises (31, 33) abgefühlt wird.

## Revendications

1. Circuit de commande pour onduleur résonant comprenant au moins un dispositif de commutation (15, 17) avec une capacité de coupure autonome situé entre une source d'alimentation continue et le circuit résonant (31, 33) de l'onduleur résonant, ce circuit de commande comprenant:

un moyen de circuit (38, 41, 43) pour détecter un paramètre de sortie particulier de l'onduleur résonant;

un moyen de génération de tension pour fournir un signal de commande pour ce paramètre;

un moyen sommateur (45) couplé audit moyen de circuit (38, 41, 43) et au moyen de génération de tension pour comparer le paramètre de signal de commande au paramètre détecté pour produire un signal d'erreur;

un moyen de générateur de fréquence pour produire un signal à fréquence fixe; et

un moyen de modulation de largeur d'impulsion (47) couplant le moyen soummateur (45) au dispositif de commutation et étant sensible au signal d'erreur et au signal à fréquence fixe pour faire varier le rapport cyclique des impulsions appliquées par le moyen modulateur de largeur d'impulsion (47) au dispositif de commutation (15, 17) pour atteindre le paramètre de sortie commandé, le signal de fréquence fixe fourni au moyen de modulation de largeur d'impulsion fixant la fréquence de fonctionnement de l'onduleur résonant sensiblement à la fréquence de résonance du circuit résonant.

2. Circuit de commande pour onduleur résonant selon la revendication 1, comprenant deux dispositifs de commutation (15, 17) avec une capacité de coupure autonome et deux diodes (19, 21), chacun des dispositifs de commutation (15, 17) étant couplé aux bornes d'une diode (19, 21), respectivement, caractérisé en ce que l'onduleur résonant est un onduleur résonant en demi-pont.

3. Circuit de commande selon l'une des revendications 1 ou 2 comprenant en outre:

un moyen de détection de courant (48) couplé au moyen de modulation de largeur d'impulsion (47) pour détecter le courant de sortie l'onduleur résonant (11), ce moyen de modulation de largeur d'impulsion (47) étant sensible au courant de sortie et court-circuitant la commande de tension et réduisant la largeur des impulsions fournies au dispositif de commutation (15, 17) à une valeur nulle quand le courant de sortie dépasse une valeur prédéterminée.

4. Circuit de commande selon la revendication 2, dans lequel le paramètre de sortie comprend la tension de sortie de l'onduleur, la tension de sortie étant détectée aux bornes du composant capacitif (33) du circuit résonant (31, 33).

FIG. 1

TRANSISTORS 15    TRANSISTORS 15
DIODE 21          DIODE 19

FIG.  2a

DIODE 19          DIODE 19

TRANSISTOR 17     TRANSISTOR 17

TRANSISTOR 15     TRANSISTOR 15
DIODE 21          DIODE 19

FIG.  2b

DIODE 19          DIODE 19

TRANSISTOR 17     TRANSISTOR 17

TRANSISTOR 15     TRANSISTOR 15
DIODE 21          DIODE 19

FIG.  2c

DIODE 19          DIODE 19

TRANSISTOR 17     TRANSISTOR 17

MAXIMUM OUTPUT VOLTAGE

FIG. 3

MINIMUM OUTPUT VOLTAGE

VOLTAGE

0   5   10  15  20  25  30  35 40  45  50

TIME  IN MICRO SECONDS

2